**Europäisches Patentamt**

**European Patent Office**

**Office européen des brevets**

(19)

(11) **EP 1 681 550 A1**

(12) **EUROPÄISCHE PATENTANMELDUNG**

(43) Veröffentlichungstag:
19.07.2006 Patentblatt 2006/29

(51) Int Cl.:
*G01N 15/06* (2006.01)    *B03C 3/00* (2006.01)

(21) Anmeldenummer: 05405015.8

(22) Anmeldetag: 13.01.2005

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(71) Anmelder: **Matter Engineering AG**
**5610 Wohlen (CH)**

(72) Erfinder:
• **Burtscher, Heinz**
  **8964 Rudolfstetten (CH)**
• **Fierz, Martin**
  **8044 Zürich (CH)**

(74) Vertreter: **Frei Patent Attorneys**
**Frei Patentanwaltsbüro**
**Postfach 1771**
**8032 Zürich (CH)**

(54) **Verfahren und Vorrichtung zur Messung von Anzahlkonzentration und mittlerem Durchmesser von Aerosolpartikeln**

(57) Gemäss der Erfindung werden Partikel eines Aerosols zunächst in einem Diffusionsauflader (10) unipolar aufgeladen. Anschliessend werden sie durch einen Diffusionabscheider (20) geleitet, in dem ein Teil der Partikel abgeschieden wird. Der abgeschiedene Strom wird gemessen und aus dem Strom wird ein Wert für die Anzahlkonzentration ermittelt. Dafür kann ein einziger Diffusionsabscheider verwendet werden. Gemäss bevorzugten Ausführungsformen sind zusätzlich eine Einrichtung zum Messen des Influenzsstroms und/oder ein Aerosolelektrometer vorhanden, mittels welchem ein Gesamtstrom gemessen werden kann. Letzeres ermöglicht zusätzlich die Bestimmung der mittleren Partikelgrösse.

Fig. 5

EP 1 681 550 A1

**Beschreibung**

Die Erfindung betrifft ein Verfahren und eine Vorrichtung zur Messung der Anzahlkonzentration und/ oder des mittleren Durchmessers von in einem Trägergas suspendierten Partikeln.

In Trägergasen suspendierte Partikel (Aerosole) spielen eine wesentliche Rolle in der Atmosphäre, der Atemluft und in vielen technischen Prozessen, zum Beispiel in den Emissionen aus Verbrennungsmotoren. Die Partikel werden oft als Schwebestaub oder Schwebeteilchen bezeichnet. Eine wichtige Aufgabe besteht darin, die Konzentration der Partikel messtechnisch zu erfassen. Partikel im Grössenbereich von weniger kleiner als 10 Mikrometer Durchmesser können vom Menschen eingeatmet werden und können sich negativ auf die Gesundheit auswirken. Neuste Forschungsergebnisse zeigen, dass die üblichen Schutzmechanismen des Menschen insbesondere für Nanopartikel <100nm nicht mehr wirksam sind. Nanopartikel entstehen hauptsächlich in Verbrennungsprozessen wie Automotoren, Kohlekraftwerken, Holzheizungen etc.

Bisherige Normen und Richtlinien geben die Partikelkonzentration meist in Form der Partikelmasse pro Volumeneinheit des Aerosols, beispielsweise in Mikrogramm pro Kubikmeter oder bei Emissionen von Kraftfahrzeugen in Masse pro gefahrene Strecke oder geleistete Energie ($\mu$g/km, $\mu$g/kWh) an. Die so angegebene Partikelbeladung erfasst praktisch nur Partikel, die grösser sind als ca. 0,1 Mikrometer, da die kleineren, die zwar in hoher Anzahlkonzentration auftreten können, massenmässig nicht ins Gewicht fallen. Messverfahren, die kleine Partikel mit entsprechender Gewichtung erfassen können, sind deshalb von aktueller Bedeutung. Im Vordergrund steht dabei eine Messung der Partikelanzahlkonzentration. Dies wird zum Beispiel auch in neuen Vorschlägen einer europäischen Expertenkommission für den Grenzwert von Emissionen von Dieselmotoren verlangt. Der interessierende Grössenbereich reicht im Fall von Dieselpartikeln von einigen Nanometern bis einige hundert Nanometer. Noch grössere Partikel haben auf die Anzahlkonzentration keinen wesentlichen Einfluss.

Heute werden zur Messung der Partikelanzahlkonzentration fast ausschliesslich Kondensationskernzähler eingesetzt (siehe zum Beispiel Aerosol Measurement, Principles, Techniques and Applications. P.A. Baron and K. Willeke, Wiley, New York, 2001). Dabei werden die Partikel in eine Umgebung mit einem übersättigten Dampf (i.a. Butanoldampf) gebracht. Der Dampf kondensiert auf den Partikeln, wodurch diese soweit wachsen, dass sie anschliessend leicht durch Messung der Lichtstreuung detektiert werden können. Das Zählen der Lichtblitze der einzelnen Partikel erlaubt eine direkte Konzentrationsbestimmung. Diese Methode ist sehr empfindlich, es können auch extrem niedrige Konzentrationen gemessen werden, sie erfordert aber insbesondere eine sehr genaue Einhaltung der Temperaturen bei der Erzeugung und Aufkondensation des übersättigten Dampfes. Das macht sie einerseits aufwendig und andererseits abhängig von den Umgebungsbedingungen.

Ist auch eine Grösseninformation erforderlich, werden hauptsächlich auf der Beweglichkeitsanalyse basierende Systeme eingesetzt, bei denen die Driftgeschwindigkeit geladener Partikel in einem elektrischen Feld gemessen wird.

Am verbreitetsten ist der Scanning mobility particle sizer (SMPS, Wang, S.C. and R.C. Flagan: Scanning electrical mobility spectrometer. *Aerosol Sci. Technol.* 13, 1990, 230-240). Er hat eine relative gute Genauigkeit, aber eine Grössenspektrumsmessung dauert etwa 1-2 Minuten. Seit 1-2 Jahren gibt es neuartige Geräte die auf einem ähnlichen Prinzip basieren, die aber eine Zeitauflösung von - 0.1-1s haben (EEPS von TSI, DMS von Cambustion). Diese Geräte sind aber gross, schwer und teuer.

Ein auf der Diffusion basierendes Gerät zur Messung von Grössenverteilungen wurde kürzlich vorgestellt (EP 1 156320 A1). Hier werden die Partikel zunächst mit einem Diffusionsauflader geladen und anschliessen in mehreren Stufen von Diffusionsabscheidern nach ihrer Grösse getrennt und elektrisch gemessen. Mit diesem Messprinzip lassen sich Grössenverteilungen von Partikeln und damit auch Informationen über die Partikelzahl in jeder Grössenklasse bestimmen. Die Apparatur ist aber verhältnismässig aufwendig, und die Auswertung von Messungen ist heikel.

Ein ebenfalls auf der elektrischen Aufladung und Messung der durch geladene Partikel bewirkten Leitfähigkeit basierendes Verfahren ist in der noch unveröffentlichten europäischen Patentanmeldung 04 405 674.5 beschrieben. Aus der Leitfähigkeit kann auf die Anzahlkonzentration geschlossen werden.

Es ist Aufgabe der vorliegenden Erfindung, ein Verfahren und eine Vorrichtung zum Messen der Partikelkonzentration bzw. Partikelanzahl und/oder der mittleren Partikelgrösse zur Verfügung zu stellen, welche Nachteile bestehender Verfahren überwindet und welches insbesondere rasche Messungen mit einer vergleichsweise wenig komplexen Apparatur ermöglicht.

Gemäss der Erfindung werden Partikel eines Aerosols zunächst in einem Diffusionsauflader bspw. unipolar aufgeladen. Anschliessend werden sie durch einen Diffusionabscheider geleitet, in dem ein Teil der Partikel abgeschieden wird. Der abgeschiedene Strom wird gemessen und aus dem Strom wird ein Wert für die Anzahlkonzentration ermittelt.

Der in einem Diffusionsabscheider von geladenen Aerosolpartikeln erzeugte Strom wird im Folgenden "Diffusionsabscheidungsstrom" genannt.

Es ist eine Erkenntnis der Erfindung, dass der verhältnismässig einfache zu messende Diffusionsabscheidungsstroms ein Mass für die Partikelanzahlkonzentration darstellt. Dies aus folgenden Gründen

Die mittlere Ladung $\bar{q}$, welche die Partikel im Diffusionsauflader erhalten, ist proportional zum Anlagerungsquerschnitt K der Partikel:

$$\overline{q} \propto K$$

wobei K eine Funktion der Partikelgrösse ist.

Die Wahrscheinlichkeit, dass ein Partikel im Diffusionsabscheider abgeschieden wird, hängt von der Diffusionskonstanten D der Partikel ab. Diese wiederum ist in guter Näherung umgekehrt proportional zum Anlagerungskoeffizienten K (gemäss (A. Keller, M. Fierz, K. Siegmann, and H. C. Siegmann, and A. Filippov, J. Vac. Sci. Technol. A 19.1 2001, 1-8).

$$D \propto K^{-1}$$

Der Diffusionsabscheidungsstrom I, den die abgeschiedenen Partikel im Diffusionsabscheider bewirken, wird gemessen. Er wird durch das Produkt aus Abscheidewahrscheinlichkeit, Partikelladung und Partikelkonzentration N bestimmt, das heisst:

$$I \propto D \cdot \overline{q} \cdot N \propto K \cdot K^{-1} \cdot N \propto N$$

Die beiden grössenabhängigen Faktoren kompensieren sich, der Diffusionsabscheidungsstrom hängt nur noch von der Partikelkonzentration ab und kann somit gemäss der Erfindung als Mass für die Partikelkonzentration verwendet werden.

Der Diffusionsauflader kann bspw. ein unipolarer Diffusionsauflader sein. Er kann einen elektrisch abgeschirmten Bereich mit einem Hochspannungsfeld aufweisen, in welchem Ionen erzeugt werden. Diese strömen durch Öffnungen in der elektrischen Abschirmung (diese ist bspw. als Gitter ausgebildet) in einen vom Aerosol durchströmten Bereich.

In einer besonders bevorzugten Ausführungsform der Erfindung wird ein einziger Diffusionsabscheider verwendet. Bei einem solchen sind die Oberflächen, an denen Partikel abgeschieden werden und dabei zu einem Diffusionsstrom beitragen, miteinander elektrisch verbunden. Es ist also nur ein Strommessgerät zur Erfassung des Diffusionsstroms notwendig. Als i.A. weniger bevorzugte Alternative können auch mehrere elektrisch parallel geschaltete Oberflächenbereiche (d.h. die Oberflächenbereiche sind bspw. mit je einem Elektrometer versehen, und die von diesen ermittelten Messwerte werden addiert, ggf. nach einer Eichanpassung) oder parallel (d.h. von unterschiedlichen Aerosolanteilen) durchströmte Oberflächenbereiche je mit einem Elektrometer verbunden sein. Im Gegensatz zum aus der EP 1 156 320 bekannten Stand der Technik, wo Informationen über die Anzahlkonzentration ggf. indirekt über die Grössenverteilung bestimmt werden können, ist kommt das erfindungsgemässe Verfahren aber ohne eine Mehrzahl von seriell hintereinander angeordneten Diffusionabscheidern aus. Das erfindungsgemässe Vorgehen ermöglicht daher die Verwendung einer verhältnismässig einfachen Apparatur für die Bestimmung der Anzahlkonzentration.

Der Diffusionsabscheider kann wie das an sich bekannt ist als Plattenabscheider, Gitterabscheider oder Rohrabscheider ausgebildet sein. Auch Kombinationen dieser Prinzipien sind denkbar, bspw. kann der Diffusionsabscheider eingangs eine Plattenkonstruktion und anschliessend damit elektrisch verbunden eine Gitter- oder Rohranordnung aufweisen; auch andere Kombinationen sind denkbar.

Wenn bei transienten Vorgängen Partikelkonzentration und/oder Grösse stark variieren, wird auch der Strom geladener Partikel, die den Diffusionsabscheider erreichen, entsprechend schwanken. Neben dem gewünschten Strom abgeschiedener Partikel bewirken diese Schwankungen einen Influenzstrom, welcher die Messung stört. Um diesen zu kompensieren, kann zusätzlich zum Diffusionsabscheider eine Einrichtung zur Messung der Influenz verwendet werden. Dann wird nur der Influenzstrom gemessen. Dieser kann dann wenn nötig nach einer Korrektur der Zeitverzögerung, mit der die Partikel in den beiden Einheiten eintreffen, und Multiplikation mit einem Korrekturfaktor, der unterschiedliche Empfindlichkeiten kompensiert, vom Signal des Diffusionabscheiders subtrahiert werden. Auf diese Weise kann der Influenzstrom kompensiert werden.

Die Einrichtung zur Messung der Influenz kann dem Diffusionsabscheider in einer seriellen Anordnung vor- oder nachgeschaltet werden. Als Alternative kann sie auch parallel angeordnet werden, d.h. je ein definierter Anteil des Aerosols wird dem Diffusionsabscheider und der Influenzmesseinrichtung zugeführt.

Die Influenzmesseinrichtung kann ähnlich aussehen wie der Diffusionsabscheider selbst, aber keine Abscheideplatten -rohre oder -gitter enthalten. Sie besitzt bspw. dieselbe geometrische Form wie der Diffusionsabscheider, wobei die Dimensionierung (bspw. die Ausdehnung in Durchflussrichtung oder die absolute Grösse) nicht identisch sein muss. Die Elektrode der Influenzmesseinrichtung kann im Wesentlichen auf Nullpotential gelegt sein bzw. dasselbe elektrische Potential aufweisen wie der Diffusionsabscheider.

Eine Influenzstrommessung der vorstehend beschriebenen Art kann auch im Zusammenhang mit anderen Messungen als der Ermittlung der Partikelanzahlkonzentration mittels Diffusionsabscheidung verwendet werden, sofern in einem transienten Prozess (also einem Prozess mit nicht-stationären Messwerten) durch Abscheidung von geladenen Aerosolpartikel an Elektroden erzeugte Ströme gemessen werden. Beispiele dafür sind Messungen der Partikelgrössenverteilung wie in EP 1 156 320 offenbart, Messungen mittels Impaktoren oder Messungen mittels differentieller Mobiltätsanalysatoren DMA. Solche Messungen beruhen darauf, dass ein Aerosol mit geladenen Partikeln eine Gas führende Anordnung durchströmt und - ggf. unter Einfluss physikalischer und/oder chemischer Einwirkungen - ein Anteil der geladenen Partikel an mit einer erste Elektrode verbundenen Abscheideflächen abgeschieden wird. Sie zeichnen sich dadurch aus, dass eine zweite Elektrode vorhanden ist, die vorzugsweise ähnlich ausgestaltet ist wie die erste Elektrode, die aber keine Abscheideflächen aufweist. Die zweite Elektrode ist der ersten Elektrode in Strömungsrichtung vor- oder nachgeschaltet, oder die Elektroden sind wie vorstehend erklärt parallel angeordnet.

Dabei ist es wie in der vorstehend erwähnten Ausführungsform der Erfindung nicht notwendig, dass die zweite Elektrode auf einem spezifischen Potential ist; sie kann beispielsweise auf Nullpotential gelegt sein oder dasselbe Potential aufweisen wie die erste Elektrode.

Gemäss einer bevorzugten Ausführungsform der Erfindung werden nebst einem näherungsweisen Wert für die Partikelanzahlkonzentration auch Informationen über die Partikelgrösse ermittelt. Die mittlere Partikelladung nämlich ist in einem weiten Grössenbereich in guter Näherung proportional zu $d^x$, wobei $d$ der Partikeldurchmesser ist und der Exponent x ungefähr 1.2 ist. Das heisst dass die Gesamtladungskonzentration $q_{tot}$, welche die Partikel tragen, proportional zu $Nd^x$ ist. Diese Gesamtladungskonzentration kann bestimmt werden, wenn alle Partikel in einem Filter abgeschieden werden und der Strom $I_{tot}$ gemessen wird, den sie dort verursachen.

Wird also sowohl ein Diffusionsabscheider als auch ein Filter verwendet, erhält man einen Strom $I$, der proportional zu $N$ ist und einen Strom $I_{tot}$, der proportional zu $Nd^x$ ist. Aus dem Quotient der beiden Ströme kann somit der Partikeldurchmesser d bestimmt werden. Es gilt nämlich:

$$d = c \cdot \left( \frac{I_{tot}}{I} \right)^{1/x}$$

Die Proportionalitätskonstante c kann in Eichmessungen bestimmt oder bei bekannter Vorrichtungsgeometrie näherungsweise berechnet werden. Wenn nicht nur eine Partikelgrösse, sondern eine mehr oder weniger breite Grössenverteilung vorliegt, erhält man durch die Bestimmung von d einen mittleren Partikeldurchmesser.

Wird der Filter zur Messung von $I_{tot}$ hinter dem Diffusionsabscheider betrieben (d.h. das Aerosol oder Anteile davon durchströmt bzw. durchströmen in einer seriellen Anordnung nacheinander den Diffusionsabscheider und das Filter), muss zum im Filter gemessenen Strom noch der in Diffusionsabscheider gemessene Diffusionsabscheidestrom $I$ addiert werden, um den Gesamtstrom $I_{tot}$ zu erhalten. Mit dieser Anordnung können Anzahlkonzentration und mittlerer Durchmesser bestimmt werden. Alternativ ist auch eine parallele Anordnung denkbar, wo ein je ein definierter Anteil des zu charakterisierenden Aerosols durch den Diffusionsabscheider bzw. das Filter gelenkt wird.

Wie bereits erwähnt, gelten die oben beschriebenen Beziehungen näherungsweise. Bei genauerer Betrachtung ist eine gewisse Grössenabhängigkeit vorhanden. Die Bestimmung der Grösse aus den Strömen $I$ und $I_{tot}$ erlaubt eine mindestens teilweise Kompensation dieser Grössenabhängigkeit. Neben der zusätzlichen Grösseninformation kann demnach auch die Genauigkeit der Anzahlkonzentrationsbestimmung verbessert werden, wenn $I_{tot}$ auch gemessen wird. Zum Beispiel kann eine experimentell bestimmte Grössenabhängigkeit berücksichtigt werden.

Eine erfindungsgemässe Vorrichtung weist eine Gas führende Anordnung auf, in welcher ein Aerosol den Diffusionsauflader und dann mindestens ein Teil davon den Diffusionsabscheider durchströmt. Eine eventuelle Influenzstrommesseinrichtung ist dem Diffusionsabscheider in Strömungsrichtung vor- oder nachgeschaltet, ein eventuelles Filter für die Messung der Gesamtladung ist sowohl dem Diffusionsabscheider als auch der Influenzsstrommesseinrichtung nachgeschaltet.

Wie erwähnt kann alternativ zu dieser seriellen Anordnung auch eine parallele Anordnung verwendet werden, bei der das Aerosol in verschiedenen Strängen geführt wird, wovon einer den Diffusionsabscheider und mindestens ein anderer bspw. die Influenzsstrommesseinrichtung und/oder das Filter für die Gesamtstrommessung aufweist. Die Vorrichtung kann noch Fördermittel - bspw. eine Pumpe - aufweisen, mittels der der Aerosoldurchfluss bewirkt und geregelt wird. Alternativ dazu kann die Förderung auch durch externe Mittel bewirkt werden, bspw. bei einer Abgasmessung durch den vom Motor erzeugten Strömungsvortrieb.

Im Folgenden werden Ausführungsbeispiele der Erfindung anhand von Figuren genauer beschrieben. In den Figuren, welche alle schematisch sind, zeigen:

- Fig. 1 einen Diffusionsauflader einer erfindungsgemässen Vorrichtung

- Fig. 2 einen Diffusionsabscheider einer erfindungsgemässen Vorrichtung

- Fig. 3 eine Messanordnung zur Messung des Influenzstromes

- Fig. 4 eine Messanordnung zur Messung des Gesamtstroms, d.h. der Gesamtladung pro Zeiteinheit

- Fig. 5 ein Gesamtschema

Die Aufladung kann durch Ionen erfolgen, die durch eine elektrische Koronaentladung erzeugt werden.

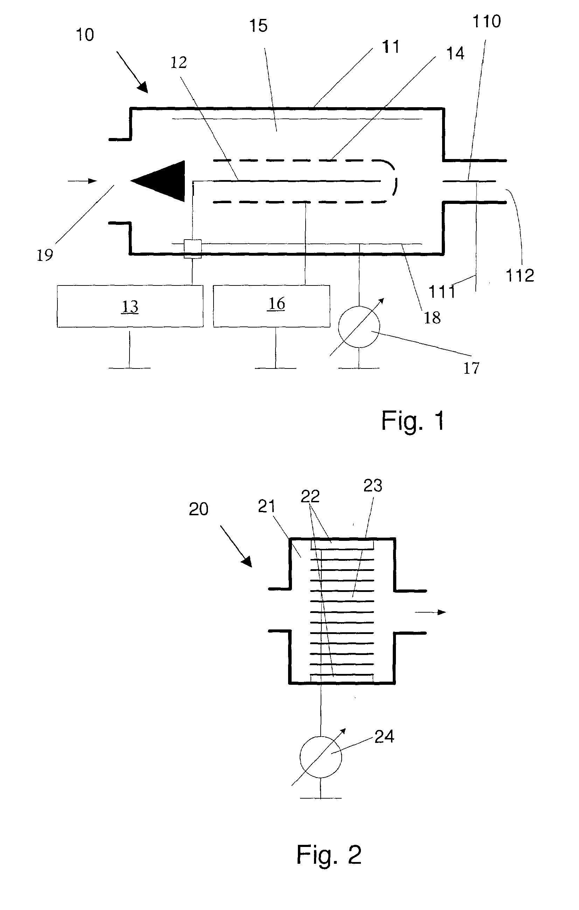

Eine mögliche Konfiguration eines Aufladers 10 ist in **Figur 1** gezeigt. In einem zylindrischen Gehäuse 11 mit einem Aerosoleinlass 19 und einem Aerosolauslass 112 befindet sich axial angeordnet ein dünner Draht 12, an dem eine Hochspannung 13 anliegt die gross genug ist um am Draht eine stille elektrische Entladung (Korona) zu erzeugen. Eine Gitteranordnung 14 schirmt den Bereich, in welchem das Hochspannungsfeld herrscht von dem vom Aerosol durchströmte Volumen 15 elektrisch ab. Die Anzahl der durch das Gitter in den Raum 15 gelangenden Ionen kann durch eine kleine an diesem Gitter angelegte Spannung (durch eine Spannungsquelle 16) variiert und durch ein Amperemeter 17 an einer äusseren, das vom Aerosol durchströmte Volumen umgebenden Elektrode 18 auf Nullpotential gemessen werden. Durch Wahl der am Gitter anliegenden Spannung 16 kann die Effizienz der Aufladung bestimmt werden. Für die beschriebene Anwendung soll sie möglichst hoch sein, die Spannung darf aber nicht zu gross gewählt werden, sonst werden auch geladene Partikel bereits im Auflader abgeschieden. Typischerweise beträgt sie zwischen 5 V und 30 V Am Ausgang des Aufladers werden nicht an Partikel angelagerte Ionen, welche die Messung verfälschen könnten, durch eine Ionenfalle abgeschieden. Dies kann ein Stab 110 sein, der über eine Zuführung 111 auf eine Spannung gelegt wird die hoch genug ist, um die Ionen abzuscheiden. Aufgrund der geringeren Mobilität werden aufgeladene Partikel bei geeigneter Wahl des elektrischen Potentials des Stabs nicht zu einem die Messung beeinflussenden Prozentsatz am Stab angelagert.

Der Diffusionsabscheider 20 gemäss **Figur 2** kann als Plattenpaket 23 ausgebildet sein, welches über einen Isolator 22 in einem Gehäuse 21 isoliert montiert ist (Plattenabscheider). Mit einem Amperemeter 24 kann der Strom, den auf den Platten abgeschiedene geladene Partikel verursachen gemessen werden. Anstelle des Plattenpaketes sind verschiedene andere Lösungsvarianten möglich. Der Diffusionsabscheider kann zum Beispiel auch als Rohrpaket (Rohrabscheider) oder als Wabenstruktur ausgeführt sein. Auch Anordnungen aus einem oder mehreren Gittern (Gitterabscheider) können eingesetzt werden. In der Literatur sind vielfältige Ausführungen von Diffusionsabscheidern zu finden.

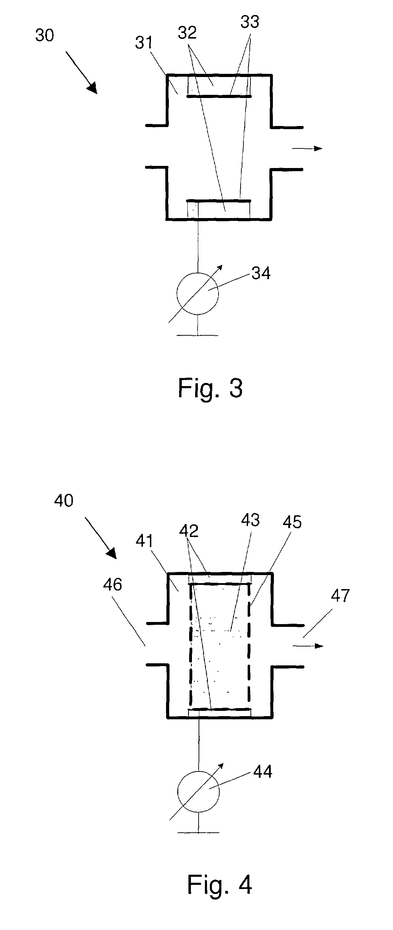

Eine Anordnung zur Messung des Influenzstromes 30 zeigt **Figur 3.** In einem dichten, elektrisch leitenden Gehäuse 31 durchströmt das Aerosol eine isoliert (Isolator 32) montierte Elektrode 33, welche mit einem Amperemeter 34 verbunden ist. Die Anordnung zur Messung des Influenzstroms hat bspw. die im wesentlichen zum Diffusionsabscheider identische zylindrische (oder auch nicht-zylindrische) Form und bspw. auch dieselben Abmessungen, wobei natürlich die Abscheideflächen (Platten, Rohre, Waben, Gitter etc.) fehlen. In einer solchen Konfiguration ist die Menge der an der Elektrode 33 abgeschiedenen Partikel klein im Vergleich zum Influenzstrom, der in dieser aufgrund von Änderungen der Gesamtpartikelladung bei transienten Vorgängen bewirkt wird.

Die Durchführung der Gesamtladungsmessung erfolgt auf an sich bekannte Weise nach dem Prinzip des Aerosolelektrometers. Hier werden die Partikel in einem elektrisch isoliert montierten Filter gesammelt und der dort entstehende Strom wird gemessen, wie dies bei den weiter oben erwähnten Sensoren auch bereits gemacht wird. Ein Beispiel eines Aerosolelektrometers 40 zeigt **Figur 4.** In einem dichten, elektrisch leitenden Gehäuse 41 mit einem Aerosoleinlass 46 und einem Auslass 47 werden die Aerosolpartikel in einem Filter 43 aufgefangen. Der Filter ist entweder selbst elektrisch leitend oder in einem leitenden, und für die Strömung durchlässigen Gehäuse 45 (Faraday Käfig) eingebaut. Er wird isoliert (Isolator 42) montiert und mit einem Amperemeter 44 verbunden. Der gemessene Strom entspricht der Gesamtladung pro Zeiteinheit.

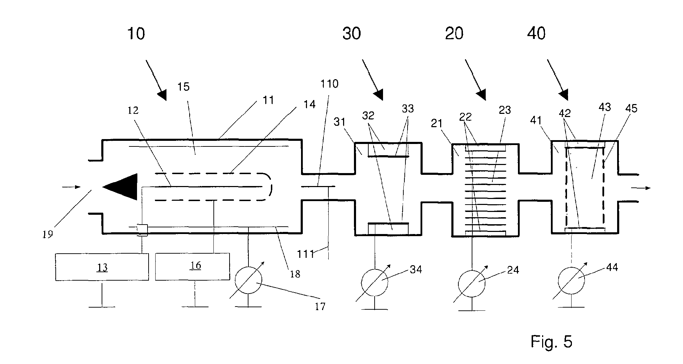

Eine mögliche Kombination der Teilsysteme in den Figuren 1 - 4 ist in Figur 5 gezeigt, wobei die in den Figuren 1 bis 4 verwendeten Bezugszeichen in Figur 5 entsprechende Elemente bezeichnen. Anschliessend an den Diffusionsauflader 10 sind in Strömungsrichtung der Reihe nach die Einrichtung zum Messen des Influenzstroms 30, der Diffusionsabscheider 20 und das Aerosolelektrometer 40 angeordnet. Andere Anordnungen sind wie bereits erwähnt ebenfalls denkbar.

Nebst der hier beschriebenen Ausführungsform sind noch viele weitere Arten denkbar, wie die Erfindung realisiert werden kann. Beispielsweise kann der Diffusionauflader in einer anderen als der beschriebenen Ausführung vorliegen; der Stand der Technik beinhaltet bspw. viele Möglichkeiten, einen Diffusionsauflader zu realisieren. Die Elektrode für die Influenzkorrektur muss nicht im Wesentlichen dieselbe Form aufweisen wie der Diffusionsabscheider sondern kann irgendeine Form haben, die keine nennenswerte Abscheidung mit sich bringt. Beispielsweise kann sie die Form eines dem Diffusionabscheider vorgelagerten groben Gitters haben, das im Extremfall lediglich aus zwei Stäben besteht.

## Patentansprüche

1.  Verfahren zur Messung der Anzahlkonzentration von Partikeln in einem Aerosol, wobei das Aerosol mittels Diffusionsaufladung elektrisch aufgeladen wird und anschliessend der Strom, den in einem einzigen Diffusionsabscheider (20), einer Mehrzahl von elektrisch parallel geschalteten oder einer Mehrzahl von parallel durchströmten Diffusionsabscheidern abgeschiedene geladene Aerosolpartikel bewirken, gemessen und aus diesem ein Wert für die Anzahlkonzentration ermittelt wird.

2.  Verfahren nach Anspruch 1, **dadurch gekennzeichnet, dass** das Aufladen des Aerosols mittels eines unipolaren Diffusionsaufladers (10) geschieht.

**3.** Verfahren nach einem der vorangehenden Ansprüche, **dadurch gekennzeichnet, dass** ein einziger Diffusionsabscheider (20) verwendet wird.

**4.** Verfahren nach einem der vorangehenden Ansprüche, bei dem der Diffusionsabscheider (20) als Plattenabscheider, als Gitterabscheider, als Rohrabscheider oder als Kombination aus einem Plattenabscheider, Gitterabscheider und/oder Rohrabscheider ausgeführt ist

**5.** Verfahren nach einem der vorangehenden Ansprüche, **dadurch gekennzeichnet, dass** ein eventuell im Diffusionsabscheider (20) auftretender Influenzstrom kompensiert wird, indem ein Influenzstrom in einer zusätzlichen Elektrode (33) gemessen wird und dieser Messwert mit demjenigen des Diffusionsabscheiders verrechnet wird.

**6.** Verfahren nach Anspruch 5, **dadurch gekennzeichnet, dass** die geometrische Form der zusätzlichen Elektrode der geometrischen Form des Diffusionsabscheiders ohne Abscheideflächen entspricht.

**7.** Verfahren nach Anspruch 5 oder 6, **dadurch gekennzeichnet, dass** der Diffusionsabscheider (20) und die zusätzliche Elektrode (33) in einer seriellen Anordnung vorliegen und nacheinander durchströmt werden.

**8.** Verfahren nach einem der vorangehenden Ansprüche, **dadurch gekennzeichnet, dass** zusätzlich zum Strom im Diffusionsabscheider (20) ein Gesamtstrom des diffusionsaufgeladenen Aerosols gemessen und aus diesem Gesamtstrom und dem Strom im Diffusionabscheider der mittlere Durchmesser der Partikel ermittelt wird.

**9.** Verfahren nach einem der vorangehenden Ansprüche, **dadurch gekennzeichnet, dass** die Anzahlkonzentration bestimmt wird, indem der Strom im Diffusionsabscheider mit einem Eichfaktor multipliziert und ggf. mittels aus Messungen des Influenzstroms und/oder des Gesamtstroms gewonnenen Korrekturwerten korrigiert wird.

**10.** Vorrichtung zur Messung der Anzahlkonzentration und/oder des mittleren Durchmessers von Partikeln eines Aerosols, insbesondere zur Durchführung des Verfahrens nach einem der vorangehenden Ansprüche, aufweisend eine Gas führende Anordnung, in welcher eine Durchströmrichtung definiert ist, einen Diffusionsauflader (10) und einen Diffusionsabscheider (20), welche so angeordnet sind, so in der Durchströmrichtung durchströmendes Aerosol zuerst den Diffusionsauflader anschliessend mindestens ein Anteil davon den Diffusionsabscheider durchströmt, eine Strommess-Einrichtung zum Bestimmen eines im Diffusionsabscheider durch Anlagerung von geladenen Partikeln des Aerosols erzeugten Diffusionsabscheidungsstroms, sowie Auswertemittel zum Ermitteln einer Anzahlkonkzentration aus dem Diffusionsabscheidungsstrom.

**11.** Vorrichtung nach Anspruch 10, **dadurch gekennzeichnet**, **gekennzeichnet durch** einem vom Diffusionsabscheider räumlich getrennte zusätzliche Elektrode (33) und eine zusätzliche Strommess-Einrichtung zum Messen des in der zusätzlichen Elektrode erzeugten Influenzsstroms.

**12.** Vorrichtung nach Anspruch 10 oder 11, **gekennzeichnet durch** ein Aerosolelektrometer (40) zum Messen eines Gesamtstroms.

Fig. 1

Fig. 2

**Fig. 3**

**Fig. 4**

Fig. 5

**EP 1 681 550 A1**

**Europäisches Patentamt**

## EUROPÄISCHER RECHERCHENBERICHT

Nummer der Anmeldung

EP 05 40 5015

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X,D | EP 1 156 320 A (SIEGMANN, HANS-CHRISTOF) 21. November 2001 (2001-11-21) | 1-12 | G01N15/06 B03C3/00 |
| Y | * das ganze Dokument * ----- | 5-8,11 | |
| Y | US 4 435 681 A (MASUDA ET AL) 6. März 1984 (1984-03-06) * Zusammenfassung * * Spalte 6, Zeile 58 - Spalte 7, Zeile 22 * * Spalte 8, Zeile 37 - Zeile 45 * * Spalte 10, Zeile 66 - Spalte 11, Zeile 5 * * Abbildung 1 * ----- | 5-7,11 | |
| Y | BUKOWIECKI ET AL: "Real-time characterization of ultrafine and accumulation mode particles in ambient combustion aerosols" JOURNAL OF AEROSOL SCIENCE, Bd. 33, August 2002 (2002-08), Seiten 1139-1154, XP002324115 PERGAMON available online 5 April 2002 * Zusammenfassung * * Seite 1143, Absatz 2.5 * ----- | 8 | |

RECHERCHIERTE SACHGEBIETE (Int.Cl.7)

G01N
B03C

Der vorliegende Recherchenbericht wurde für alle Patentansprüche erstellt

| Recherchenort | Abschlußdatum der Recherche | Prüfer |
|---|---|---|
| München | 12. April 2005 | Bravin, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 40 5015

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-04-2005

| Im Recherchenbericht angeführtes Patentdokument | Datum der Veröffentlichung | Mitglied(er) der Patentfamilie | Datum der Veröffentlichung |
|---|---|---|---|
| EP 1156320 A | 21-11-2001 | EP 1156320 A1 | 21-11-2001 |
| US 4435681 A | 06-03-1984 | KEINE | |

EPO FORM P0461

Für nähere Einzelheiten zu diesem Anhang : siehe Amtsblatt des Europäischen Patentamts, Nr.12/82